# EUROPEAN PATENT APPLICATION

(11) **EP 2 186 666 A1**
(43) Date of publication of application: **19.05.2010**
(21) Application number: 08425728.6
(22) Date of filing: 13.11.2008
(51) Int. Cl.: B60J 7/06

(54) **Skid for tarpaulin support centering**

(71) Applicant: Marcolin S.r.l., 33170 Pordenone (IT)
(72) Inventor: Amato, Davide, 33080 Fiume Veneto, Pordenone (IT)
(74) Representative: Feltrinelli, Secondo Andrea

(57) **Abstract**

It is described a skid (20) to be mounted on the feet (12) of a centering (10) which supports a covering tarpaulin (14) of a top-body belonging to a vehicle or standing-alone. The skid moves on the upper edge (16) of the top-body and is subject to wear and friction.

The invention teaches for rolling means (26) to be on the skid for the support on the edge of the top-body adapted to make the skid slide without rubbing on said edge.

## Description

The invention relates to a skid for a support centering of a tarpaulin, used in a drive apparatus for a covering of top-bodies, preferably in heavy trucks; the invention also relates to the drive apparatus, destined to move the tarpaulin, which includes said skid.

On the top-bodies of vehicles or containers is commonly mounted a covering bellows-foldable tarpaulin, distributed on and supported by centerings slidable on the edge of the top-body.

The centerings are moved by two rings of cable, placed on both sides of the top-body, in tension between two pulleys, one of which is set in rotation by a motor. The feet of the leading centering are fastened respectively to a cable segment belonging to each ring; the other centerings only slide over the cables and use them as a guide. When the motor is on it sets in motion the cable rings with equiverse direction and they drag back and forth the centerings, pushed or drawn by the leading centering.

All the feet of the centerings freely slide on the flat upper edge of the top-body. Since the centerings are metallic the sliding of their feet on the edge of the top-body, metallic as well, is difficult. Thus the feet are inserted in plastic skids, very often made of a low friction-coefficient material or in any case of a relatively soft material (e.g. Nylon loaded with elastomer or fiberglass then placed in water to soften). A more rigid material, although more durable, cracks because of the thermal excursion it is subject to (from the beating sun to snow). EP 1 093 949 shows a typical configuration for the skids of the known art, in particular in fig. 3 and 6.

A problem of this system is the wear of the skid.

Its base, which is flat and usually measures 40-50mm, while sliding on the top-body gets consumed. In addition the centerings, especially the leading one which pushes or draws all the others, during the movement will tilt so that they do not slide vertical but slightly bent. Therefore the effective sliding surface of the skid is no more 40-50mm but it reduces in practice to the edge, which wears very quickly being subject to greater and more concentrated load. Over time the base surface is so eroded and becomes so small that replacing the skid happens to be imposed.

The object of invention is to provide a skid which wears much less than those known.

Another object is to produce a drive apparatus for a covering tarpaulin which is more reliable and less subject to maintenance and/or failures.

These objects are achieved with a skid to be mounted on the feet of a centering which supports a covering tarpaulin of a top-body belonging to a vehicle or standing-alone, the skid being destined to move on the upper edge of the top-body, wherein it comprises rolling means for the support on the edge of the top-body adapted to make the skid slide without rubbing on said edge. In this way the skid moves with constant inclination on the edge of the top-body and with reduced friction.

In general, the objects are also achieved by a drive apparatus for the covering tarpaulin of a top-body, the top-body belonging to a vehicle or forming a stand-alone unit, equipped with centerings slidable on the upper edge of the top-body which support the tarpaulin and allow to fold or extend it over said top-body, wherein on a or each centering there is fitted a skid according to the invention. The reduced wear of the skid and its greater stability increase the performance of the whole drive apparatus.

Preferred variants of the skid are defined in the dependent claims, among which:
- on a lower surface facing the edge of the top-body there are coupled one or more rolling members adapted to space said surface from said edge. So every non-rolling resistance is eliminated;
- the rolling axis of the rolling members is internal to the body of the skid and/or a or each rolling member is recessed in an open cavity in said lower surface from which it protrudes to roll on the edge of the bop-body. This minimizes the size of the skid while contemporaneously lowering the center of gravity thereof with respect to the edge of the top-body, with greater stability when moving;
- a known skid (e.g. that in EP 1 093 949) may be taken and modified according to the invention, or may be designed from scratch, and e.g. carried out as an elongated member substantially with the shape of a small block and/or a parallelepiped and/or a rectangoloid and/or a cylindroid. In any case, the skid is a separate member from the centering and is mounted thereon subsequently;
- the small block may include a U-shaped groove for housing and fixing therein a centering foot, thereby simplifying the coupling between the two. The groove may be formed on one side of the small block, that in use facing upwards, and on the other opposite side one or more cavities may be formed to accommodate the one or more rolling members (again to optimize the position of gravity center of the skid). The groove and the cavities may be made through milling or directly during molding, so the structure of the skid is cheap. A very stable configuration is reached when the cavities, preferably two, are obtained on the surface of the skid facing the edge of the top-body at one and the other side of a plane passing both through the longitudinal axis of the groove and orthogonally to said surface;
- the skid may also comprise as rolling member, or consist of, a toroidal or tubular member which is mounted externally to it in a rotatable manner. The rotation axis of the external member is internal to the skid and substantially coaxial to a longitudinal axis of the skid itself. This rotatable member is used to support the skid on the edge of the top-body, in order for it to slide without rubbing.

The invention and its advantages will be clearer by the following description of a preferred embodiment of a skid, together with the drawings in which
Figure 1 shows a three-dimensional front view of the skid;
Figure 2 shows a three-dimensional bottom view of the skid;
Figure 3 shows an exploded view of the skid;
Figure 4 shows schematically a variant of the invention.

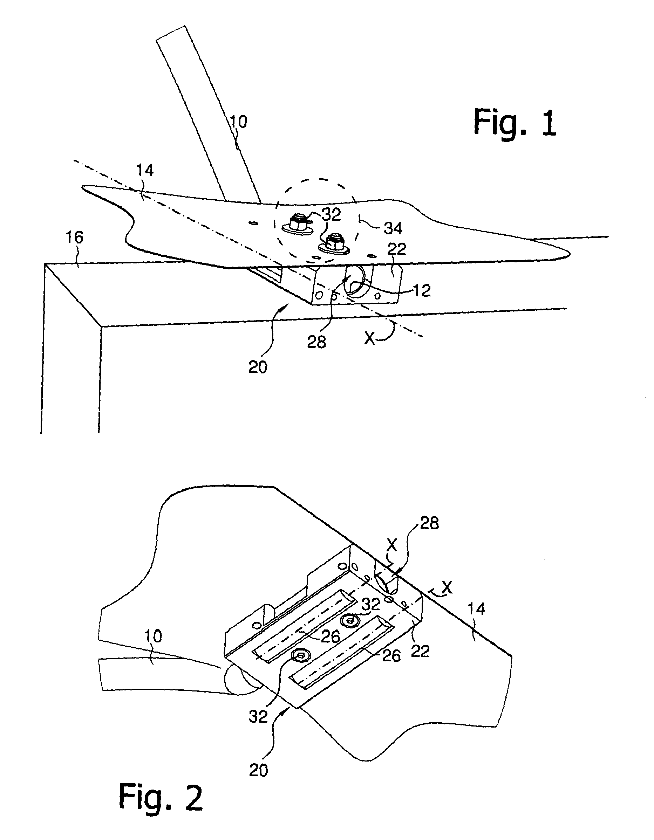

The skid 20 is mounted to the foot 12 (one per side) of a centering 10 and can move slidably and horizontally on the upper edge 16 of a top-body (Fig. 1). The centering 10, along with others not shown, supports a tarpaulin 14, shown only in part, and e.g. can be moved with a cable system like that of the known art described initially.

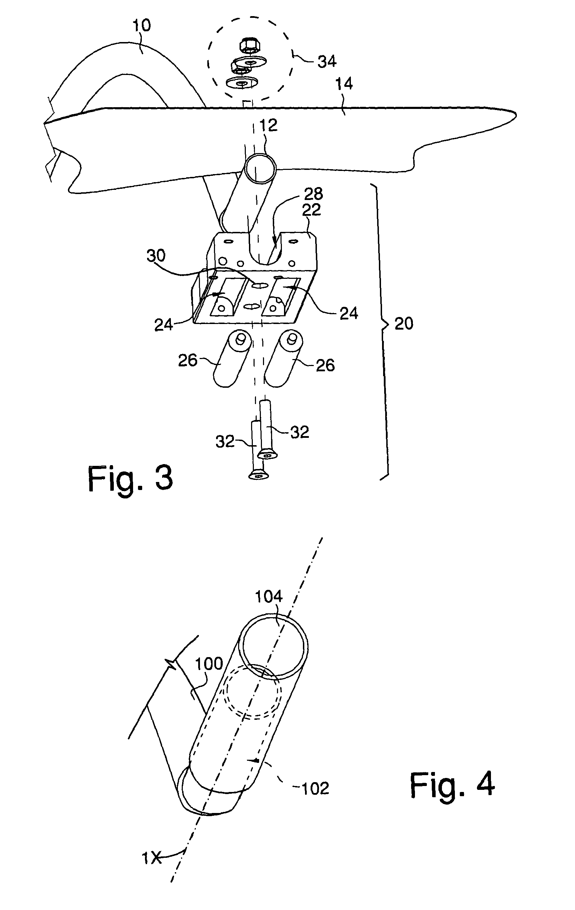

The skid 20 includes (Fig. 3) a small block 22, two parallel rollers 26, two bolts 32 and some nuts with washers generally indicated by 34.

At the upper part (in use) of the small block 22 there is made a U-shaped groove 28, in which the foot 12 is inserted. The rollers 26 are rotatably housed and pivoted in two respective cavities 24 present in the base of the small block 22. The axis of rotation X of the rollers 26 is (approximately) horizontal and parallel to the plane of the edge 16, and is parallel to the longitudinal axis of the foot 12 as well. The axis X (Fig. 2) is internal to the block 22, and the rollers 26 protrude slightly below the block 22 in order to lift it with respect to the edge 16 and to roll on it.

The small block 22 presents at the center two vertical through-holes 30 arriving in the groove 28. The foot 12 has holes (not shown) which locate at the holes 30 when the foot 12 is placed in the groove 28. It is possible then to fix the centering 10 to the block 22 by inserting in the holes 28 the bolts 32 up to crossing the foot 12, and then to tighten the nuts 34. Furthermore, also the tarpaulin 14 is attachable to the block 22: it suffices to drill it and spread it out just above the foot 12 and the block 22, to pass the tip of the bolts 32 in his holes and then to tighten the nuts 34 (with washers) to secure it to the skid 20 .

Fig. 4 illustrates the concept for a variant. A centering 100 has a foot 102 fit in a hollow cylinder 104. The cylinder 104 is mounted swiveling on the foot 102, for example through bearings around an axis 1X substantially coincident with the axis of the foot 102. Preferably means are used, not shown, to connect the foot 102 and the cylinder 104 so that they do not detach. And other means are used, not shown, to fix on the foot 102 the tarpaulin. Instead of the cylinder 104 e.g. a wheel, a torus or the like may be used, but always mounted coaxially and revolving on and outside the foot 102. In this case the skid itself becomes a swivel. Else, one can think to mount the foot of the centering on a small block similar to block 22, and around such a block to mount a member similar to the 104. In this case, the small block ends up to be contained in the swivel.

## Claims

1. Skid (20) to be mounted on the feet (12) of a centering (10) which supports a covering tarpaulin (14) of a top-body belonging to a vehicle or standing-alone, the skid being destined to move on the upper edge (16) of the top-body, **characterized by** comprising rolling means (26) for the support on the edge of the top-body adapted to make the skid slide without rubbing on said edge.

2. Skid according to claim 1, comprising a lower surface facing the edge of the top-body on which there are coupled one or more rolling members (26) adapted to space said surface from said edge.

3. Skid according to claim 2, wherein said rolling members have a rolling axis (X) substantially parallel to the edge of the top-body.

4. Skid according to claim 3, wherein said axis is internal to the body of the skid.

5. Skid according to any of the previous claims, wherein the skid is an elongated member (22) shaped as a small block.

6. Skid according to any of the previous claims 2 to 5, wherein a or each rolling member is recessed in an open cavity (24) in said lower surface from which it protrudes to roll on the edge of the bop-body.

7. Skid according to any of the previous claims 2 to 6, wherein a or each rolling member comprises a roller (26) pivoted in the body of the skid.

8. Skid according to claim 7, wherein the roller length is essentially equal to that of said lower surface.

9. Skid according to claim 5 and optionally to any claims 6 to 8, wherein said small block comprises a U-shaped groove (28) for housing and fixing therein a centering foot (12).

10. Skid according to claim 9, having said groove (28) on one side and one or more cavities (24) to accommodate the one or more rolling members on the opposite side.

11. Skid according to claim 10, wherein the cavities are obtained at one side and the other of a plane both passing through a longitudinal axis of said groove and orthogonal to said lower surface.

12. Skid according to claim 1, comprising or being constituted by a toroidal or tubular member (104) which is externally rotatably mounted to it with rotation axis (1X) internal to the skid and substantially coaxial to a longitudinal axis of the skid itself, the rotatable member supporting on the edge of the top-body so as to allow the skid to slide thereon without rubbing.

13. Skid according to any of the previous claims, comprising manually operable connecting/disconnecting means to assemble/disassemble the rolling means of the skid.

14. Skid according to any of the previous claims, comprising connecting/disconnecting means (32, 34) to connect/disconnect the tarpaulin to the skid.

15. Drive apparatus for the covering tarpaulin (14) of a top-body, the top-body belonging to a vehicle or forming a stand-alone unit, equipped with centerings (10) slidable on the upper edge (16) of the top-body which support the tarpaulin and allow to fold or extend it over said top-body, **characterized in that** on a or each centering there is fitted a skid (10) as claimed in the previous claims.
